## Europäisches Patentamt

## European Patent Office

## Office européen des brevets

(11) Veröffentlichungsnummer: **0 069 243**

**B1**

(12)

# EUROPÄISCHE PATENTSCHRIFT

(45) Veröffentlichungstag der Patentschrift:
26.11.86

(21) Anmeldenummer: 82105135.6

(22) Anmeldetag: 11.06.82

(51) Int. Cl.⁴: **F 02 C 3/20,** F 02 C 3/00,
B 04 C 9/00

(54) Heissgassystem.

(30) Priorität: 24.06.81 DE 3124832

(43) Veröffentlichungstag der Anmeldung:
12.01.83 Patentblatt 83/2

(45) Bekanntmachung des Hinweises auf die Patenterteilung:
26.11.86 Patentblatt 86/48

(84) Benannte Vertragsstaaten:
BE FR GB

(56) Entgegenhaltungen:
DE-A-2 113 599
DE-A-2 650 491
DE-A-2 820 233
GB-A-861 924
GB-A-1 103 737
GB-A-2 057 060
US-A-3 972 180
US-A-4 223 529

(73) Patentinhaber: KRAFTWERK UNION
AKTIENGESELLSCHAFT, Wiesenstrasse 35, D-4330
Mülheim (Ruhr) (DE)

(72) Erfinder: Klein, Heinrich, Dipl.- Ing.,
Wehneltstrasse 12, D-8520 Erlangen (DE)
Erfinder: Weber, Eduard, Dipl.- Phys., Payerstrasse
18, D-8500 Nürnberg (DE)
Erfinder: Pieper, Rudolf, Dipl.- Phys., Essenbacher
Strasse 6, D-8520 Erlangen (DE)

(74) Vertreter: Mehl, Ernst, Dipl.- Ing., Postfach 22 01
76, D-8000 München 22 (DE)

EP 0 069 243 B1

### Beschreibung

Die Erfindung bezieht sich auf ein Heißgassystem, bei dem zwischen einer Wirbelschichtfeuerung und einer nachgeschalteten Gasturbine ein Drehströmungswirbler mit Bunkerabsaugung angeordnet ist.

Zur Erhöhung des Wirkungsgrades von Kraftwerken auf Kohlebasis wird heute in zunehmendem Maße die sog. Wirbelschichtfeuerung in Betracht gezogen. Bei dieser Feuerung treten Rauchgase mit z.B. 900° C und bis zu 12 Atü auf, die in Gasturbinen weiter ausgenutzt werden sollen. Es ist verständlich, daß die Rauchgase vorher intensiv gereinigt werden müssen. Vorgeschlagen wurde hierbei der Einsatz eines Drehströmungswirblers (vgl.AIChE-SYMPOSIUM-SERIES, Nr. 126, Volume 68, S. 270 bis 271). Ein derartiger Drehströmungswirbler zur Abscheidung von Teilchen aus Gasen besteht aus einer zylindrischen Wirbelkammer, einem koaxialen, in einer Vordrehdüse endenden Einströmrohr für das Rohgas, einer das Einströmrohr umgebenden Bunkerblende mit einem Teilchenaustragsringschlitz zum Bunker in Wirbelkammermantelnähe, einem gegenüberliegenden Reingasauslaß, einen den Reingasauslaß umgebenden Hilfsgasaustritt und einen am Wirbelkammermantel liegenden Hilfsgaseintritt für schräg tangential einzublasendes Hilfsgas.

Zur Erhöhung des Abscheidewirkungsgrades eines Drehströmungswirblers bei der Verwendung in einer Wirbelschichtfeuerung ist es bereits bekannt, den Bunker über eine Leitung regelbar mit einer Stelle des Entstaubungssystems bzw. Drehströmungswirblers zu verbinden, an der der Druck niedriger als der Druck im Bunker ist. Auf diese Weise läßt sich im Bunker ein relativer Unterdruck erreichen und damit die durch den Teilchenaustrittsringschlitz geförderte Staubmenge erhöhen (vergl. DE-A-28 20 233).

Die Aufgabe der vorliegenden Erfindung besteht darin, bei einem System der eingangs genannten Art den Gesamtwirkungsgrad zu erhöhen. Diese Aufgabe wird erfindungsgemäß durch die Merkmale des kennzeichnenden Teiles des Patentanspruches 1 bzw. 2 gelöst.

Auf diese Weise werden die brennbaren Reststaubbestandteile ausgenutzt, erwünschte Ballaststoffe in die Feuerung eingebracht und die abgesaugte Bunkerluft gereinigt. Da durch die vorliegende Erfindung ein wesentlicher Teil oder die gesamte Bunkerabsaugluft praktisch im Kreis gefahren werden kann, geht nur wenig Energie verloren; maximal vielleicht die zur Druckaufstockung erforderliche Energie.

Aus den US-Patentschriften 42 23 529 und 39 72 180 sowie aus der britischen Patentschrift 11 03 737 ist zwar ein Heißgassystem bekannt mit einem Zyklonabscheider zwischen der Wirbelschichtfeuerung und der Gasturbine, aus dem abgeschiedene Partikel in den Brennstoffeingang bzw. den Brennstoff der Wirbelschichtfeuerung zurückgeführt werden, jedoch werden weder Bunkergase aus dem Abscheider in die Wirbelschichtfeuerung zurückgeführt noch Zweitluft für den Abscheider aus der Verbrennungsluft der Wirbelschichtfeuerung abgezweigt.

Anhand einer Zeichnung sei die Erfindung näher erläutert; es zeigen:

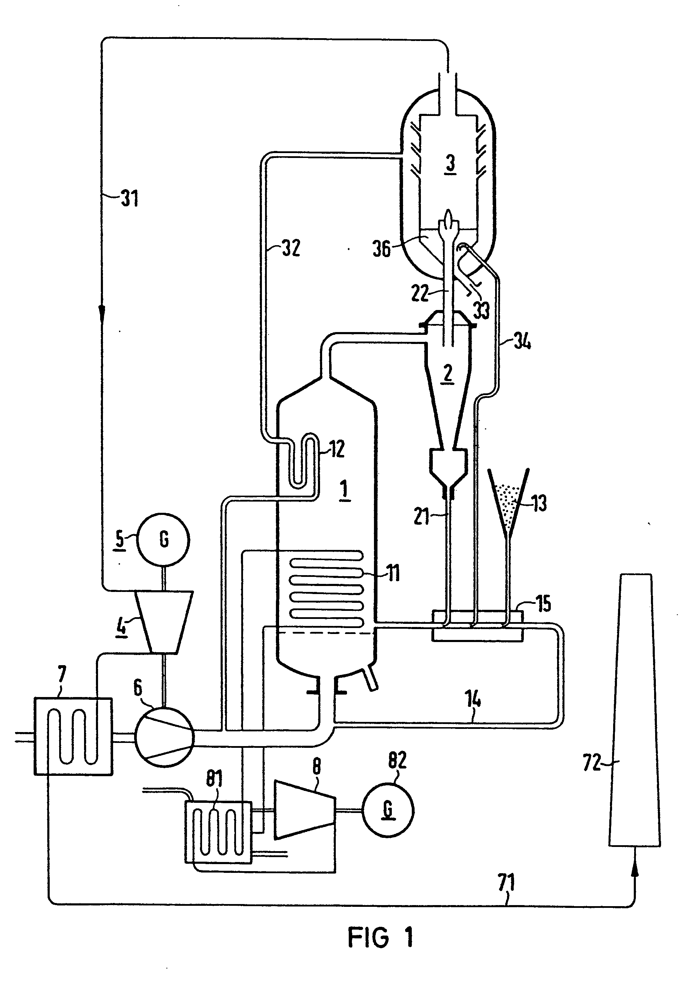

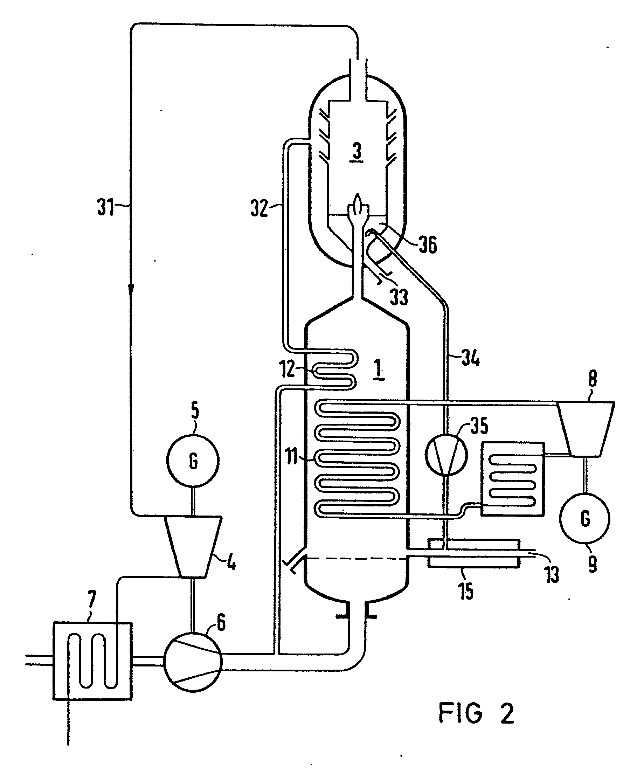

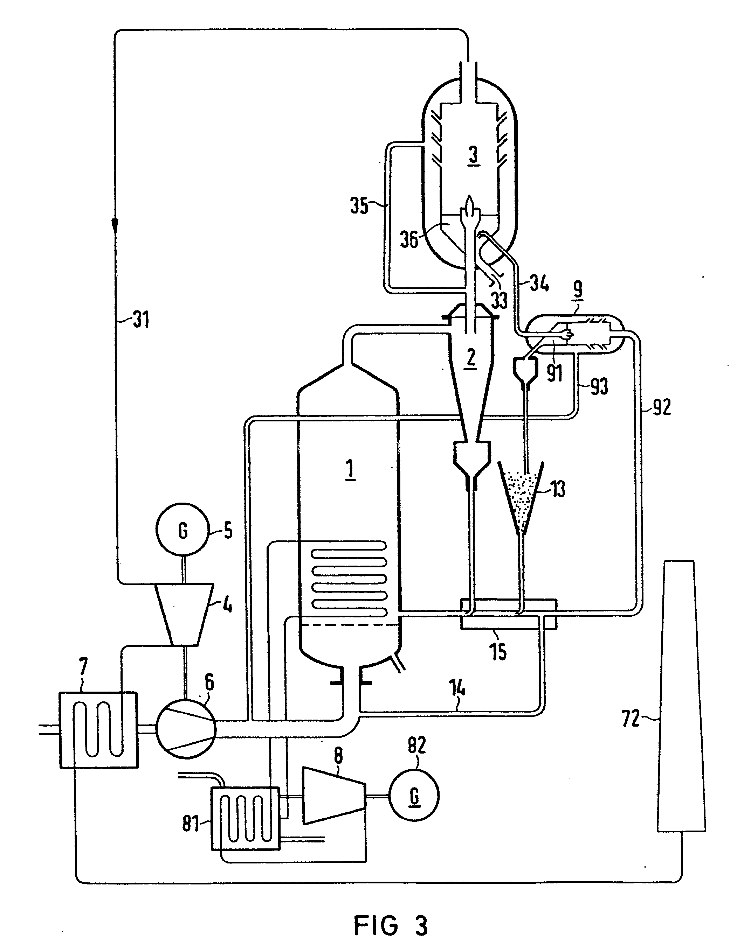

Fig. 1 ein System bestehend aus Wirbelschichtfeuerung, Drehströmungswirbler und nachgeschalteter Gasturbine, Fig. 2 und 3 Modifikationen der Anordnung nach Fig. 1 hinsichtlich der Bunkerabsaugung.

Bei der in Fig. 1 gezeigten Anordnung gelangen die aus der Wirbelschichtfeuerung 1 stammenden Rauchgase von z.B. 900° C und 8 atü zunächst zur Abscheidung der groben Teilchen in einen Zyklonabscheider 2. Wie aus der Zeichnung ersichtlich, werden die abgeschiedenen Ruß- und Ascheteilchen über die Leitung 21 zusammen mit der zu verfeuernden Kohle 13 mit einer Einführungseinrichtung 15 (vergl. z.B. VDI-Berichte 1978, Nr. 322, Seiten 80 bis 81) wieder in die Wirbelschichtfeuerung zurückgeführt, während die den Zyklon 2 über die Leitung 22 verlassenden Rauchgase in den zur weiteren Rauchgasreinigung dienenden Drehströmungswirbler 3 gelangen. Von hier aus gelangt dann das gereinigte Gas über die schematisch dargestellte Leitung 31 zu einer Gasturbine 4, die einen Generator 5 antreibt und von hier aus dann über einen Wärmetauscher 7 und eine Leitung 71 zum Schornstein 72. Die Verbrennungsluft für die Wirbelschichtfeuerung 1 wird über den Wärmetauscher 7 von einem Verdichter 6 angesaugt, der ebenfalls von der Gasturbine 4 angetrieben wird. In dem in der Wirbelschichtfeuerung 1 vorgesehenen Heizrohr 11 wird Heißdampf zum Antrieb der Dampfturbine 8 erzeugt, der ihrerseits wieder ein Generator 82 und ein Kondensator 81 zugeordnet sind.

Die zum Betrieb des Drehströmungswirblers 3 erforderliche Zweitluft zur Anregung der Drehströmung wird nach dem Verdichter 6 aus der Verbrennungszuluft entnommen und über einen in der Wirbelschichtfeuerung 1 angeordneten Wärmetauscher 12 und Leitung 32 dem Drehströmungswirbler 3 zugeführt.

Die im Bunkerraum 36 des Drehströmungswirblers 3 angefallene Asche wird über einen Bunkerabzug 33 abgezogen. Zur Erhöhung des Wirkungsgrades des Drehströmungswirblers 3 ist eine Bunkerabsaugung vorgesehen, mit der die im Bunkerraum 36 vorliegende staubbeladene Heißluft über die Leitung 34 in die Wirbelschichtfeuerung 1 zurückgeführt wird. Zur Rückführung in die Wirbelschichtfeuerung 1 dient ebenfalls die Vorrichtung 15, mit der die gemahlene Kohle 13 in die unter Druck stehende Wirbelschichtfeuerung 1 eingebracht wird. Hierzu wird vom Ausgang des Verdichters 6 über eine Leitung 14 Druckluft als Förderluft abgezweigt.

Bei der in Figur 2 gezeigten Anordnung entfällt der Zyklon. In die vom Bunkerraum 36 des Drehströmungswirblers 3 zur Wirbelschichtfeuerung 1 zurückführende Leitung 34 ist ein Gebläse 35 eingebaut.

Bei der in Figur 3 gezeigten Anordnung ist zwischen der Bunkerabsaugung im Bunker 36 des Drehströmungswirblers 3 und der Rückführung der abgesaugten Bunkerluft in die Wirbelschichtfeuerung 1 ein weiterer Drehströmungswirbler 9 vorgesehen. Die aus dem Bunkerraum 36 abgesaugten Gase gelangen über die Leitung 34 als Rohgas in diesen Drehströmungswirbler 9, verlassen ihn gereinigt und werden über Leitung 92 zur Wirbelschichtfeuerung 1 geführt. Die im Bunkerraum 91 des Drehströmungsentstaubers 9 abgeschiedenen Ascheteilchen und Rußteilchen werden der Kohleaufgabe 13 zugeführt. Zur Erzeugung der Zweitluft für den Drehströmungsentstauber 9 ist eine Leitung 93 vorgesehen, mit der ein Teil der Verbrennungszuluft vom Ausgang des Verdichters 6 abgezweigt werden kann. Diese über die Leitung 93 zuströmende Zweitluft kann dann auch noch über einen nicht dargestellten Wärmetauscher in der Wirbelschichtfeuerung 1 geführt sein. Die Zweitluft für den Drehströmungswirbler 3 wird über eine Leitung 35 aus dem zuströmenden Rohgas entnommen.

**Patentansprüche**

1.Heißgassystem, bei dem zwischen einer Wirbelschichtfeuerung und einer nachgeschalteten Gasturbine ein Drehströmungswirbler mit Bunkerabsaugung angeordnet ist, dadurch gekennzeichnet, daß die abgesaugten Bunkergase zumindest teilweise in die Wirbelschichtfeuerung (1) zurückgeführt sind und daß die zum Erzeugen der Drehströmung im Drehströmungswirbler (3) dienende Zweitluft aus der Verbrennungszuluft der Wirbelschichtfeuerung (1) abgezweigt ist.

2. Heißgassystem, bei dem zwischen einer Wirbelschichtfeuerung und einer nachgeschalteten Gasturbine ein Drehströmungswirbler mit Bunkerabsaugung angeordnet ist, dadurch gekennzeichnet, daß die abgesaugten Bunkergase zumindest teilweise in die Wirbelschichtfeuerung (1) zurückgeführt sind, daß die zum Erzeugen der Drehströmung im Drehströmungswirbler (3) dienende Zweitluft aus dem Rohgas stammt, das dem Drehströmungswirbler (3) zuströmt, und daß zwischen Bunkerabsaugung und Rückspeisung in die Wirbelschichtfeuerung (1) ein zusätzlicher Drehströmungswirbler (9) angeordnet ist, der seine Zweitluft aus der Verbrennungszuluft der Wirbelschichtfeuerung (1) erhält.

3. Heißgassystem nach Anspruch 1, dadurch gekennzeichnet, daß die zum Erzeugen der Drehströmung im Drehströmungswirbler (3) aus der Verbrennungszuluft der Wirbelschichtfeuerung (1) abgezweigte Zweitluft über einen Wärmetauscher (12) geführt ist.

4. Heißgassystem nach Anspruch 1, dadurch gekennzeichnet, daß in der Rückführung der Bunkerabsaugluft zur Wirbelschichtfeuerung (1) ein Gebläse (35) angeordnet ist.

5. Heißgassystem nach Anspruch 1 oder 2, dadurch gekennzeichnet, daß zwischen Wirbelschichtfeuerung (1) und Drehströmungswirbler (3) ein Zyklonabscheider (2) angeordnet ist, dessen Abscheideprodukte ebenfalls wieder der Wirbelschichtfeuerung (1) zuführbar sind.

**Claims**

1. Hot gas system in which a rotary flow centrifugal separator with removal by suction in the bunker is provided between a fluidized bed furnace and a subsequently connected gas turbine, characterised in that the bunker gases, which have been removed by suction, are returned, at least partially, to the fluidized bed furnace (1) and the secondary air, which serves to produce the rotary flow in the rotary flow centrifugal separator (3), is tapped from the supply combustion air of the fluidized bed furnace (1).

2. Hot gas system in which a rotary flow centrifugal separator with removal by suction in the bunker is provided between a fluidized bed furnace and a subsequently connected gas turbine, characterised in that the bunker gases, which have been removed by suction, are returned, at least partially, to the fluidized bed furnace (1), the secondary air, which serves to produce the rotary flow in the rotary flow centrifugal separator (3), originates from the crude gas which flows into the rotary flow centrifugal separator (3) and an additional rotary flow centrifugal separator (9), which obtains its secondary air from the supply combustion air of the fluidized bed furnace (1), is provided between the removal by suction in the bunker and the feedback to the fluidized bed furnace (1).

3. Hot gas system according to claim 1, characterised in that the secondary air, which, for the purposes of producing the rotary flow in the rotary flow centrifugal separator (3), is tapped from the supply combustion air of the fluidized bed furnace (1), is conducted via a heat exchanger (12).

4. Hot gas system according to claim 1, characterised in that a blower (35) is provided in the return of the bunker air removed by suction to the fluidized bed furnace (1).

5. Hot gas system according to claim 1 or 2, characterised in that a cyclone separator (2), whose products of separation may likewise be fed back to the fluidized bed furnace (1), is provided between fluidized bed furnace (1) and rotary flow centrifugal separator (3).

## Revendications

1. Système à gaz chauds dans lequel un cyclone à courant tourbillonnaire et à aspiration dans la trémie est disposé entre un foyer à lit fluidisé et une turbine à gaz montée en aval, caractérisé en ce que les gaz de trémie aspirés sont retournés, au moins en partie, au foyer à lit fluidisé (1), et en ce que l'air secondaire servant à produire l'écoulement tourbillonnaire dans le cyclone à écoulement tourbillonnaire (3) est dérivé de l'air de combustion amené au foyer à lit fluidisé (1).

2. Système à gaz chauds, dans lequel un cyclone à courant tourbillonnaire et à aspiration dans la trémie est disposé entre un foyer à lit fluidisé et une turbine à gaz montée en aval, caractérisé en ce que les gaz de trémie aspirés sont retournés, au moins en partie, au foyer à lit fluidisé (1), en ce que l'air secondaire servant à produire l'écoulement tourbillonnaire dans le cyclone à écoulement tourbillonnaire (3) provient du gaz brut qui est envoyé au cyclone à écoulement tourbillonnaire (3), et en ce que, entre l'aspiration de trémie et l'alimentation en retour dans le foyer à lit fluidisé (1), est disposé un cyclone supplémentaire à écoulement tourbillonnaire (9), qui reçoit son air secondaire de l'air de combustion envoyé au foyer à lit fluidisé (1).

3. Système à gaz chauds suivant la revendication 1, caractérisé en ce que l'air secondaire dérivé de l'air de combustion amené au foyer à lit fluidisé (1) pour produire l'écoulement tourbillonnaire dans le cyclone à écoulement tourbillonnaire (3) est envoyé dans un échangeur de chaleur (12).

4. Système à gaz chauds suivant la revendication 1, caractérisé en ce que, dans le conduit retournant l'air aspiré de la trémie au foyer à lit fluidisé (1), est disposée une soufflante (35).

5. Système à gaz chauds suivant la revendication 1 ou 2, caractérisé en ce que, entre le foyer à lit fluidisé (1) et le cyclone à écoulement tourbillonnaire (3), est disposé un séparateur à cyclone (2), dont les produits séparés peuvent être également retournés au foyer à lit fluidisé (1).

FIG 1

FIG 2

FIG 3